Europäisches Patentamt

European Patent Office

Office européen des brevets

(11) Veröffentlichungsnummer: **0 040 809**
A2

## (12) EUROPÄISCHE PATENTANMELDUNG

(21) Anmeldenummer: 81103872.8

(22) Anmeldetag: 20.05.81

(51) Int. Cl.³: **F 16 H 55/30, F 16 H 7/06**

(30) Priorität: 22.05.80 DE 3019567

(43) Veröffentlichungstag der Anmeldung: 02.12.81
Patentblatt 81/48

(84) Benannte Vertragsstaaten: **AT BE FR GB IT NL SE**

(71) Anmelder: **Becker-Prünte GmbH,
August-Becker-Strasse 10, D-4354 Datteln Westfalen
(DE)**

(72) Erfinder: **Binkowski, Helmut, Kieselstrasse 39,
D-4355 Waltrop (DE)**
Erfinder: **Micksch, Bodo, Bergstrasse 10,
D-4353 Oer-Erkenschwick (DE)**

(74) Vertreter: **Herrmann-Trentepohl, Werner, Dipl.-Ing. et al,
Schaeferstrasse 18, D-4690 Herne 1 (DE)**

(54) **Kettentriebrad, insbesondere für Rundgliederketten.**

(57) Die Erfindung betrifft ein Kettentriebrad (3), insbesondere für Rundgliederketten (20–24), bei dem die Zähne (25–28) eines ein- oder mehrteiligen Zahnrades jeweils in jedes zweite Glied (20, 21, 24) der Kette eingreifen, während die Verbindungskettenglieder (22, 23) in den von den Zahnflanken (51, 52) begrenzten Lücken untergebracht sind, wobei zur Abstützung der Eingriffskettenglieder (20, 21, 24) an gegenüberliegenden Seiten jedes Zahnes (25–28) Konsolen (35, 36) als Widerlager für die Kettengliedschenkel (44) ausgebildet sind und zu dem Zweck, die Lebensdauer der Ketten, die um Zahnräder der bezeichneten umlaufen, zu erhöhen und damit gleichzeitig das Kettentriebrad, d.h. insbesondere sein Zahnrad zu schonen, vorgesehen ist, daß die Konsolen (35, 36) als gesonderte Bauteile ausgebildet und um jeweils eine den betreffenden Zahnfuß durchsetzende Achse (33) drehbeweglich angeordnet sind, die koaxial zur Zahnradwelle (1) verläuft.

**Dipl.-Phys. Eduard Betzler**

**Dipl.-Ing. W. Herrmann-Trentepohl**

PATENTANWÄLTE

Professional representatives
to the European Patent Office.

8000 München 40,
Eisenacher Straße 17

Pat.-Anw. Betzler

Fernsprecher: 089 / 36 30 11
36 30 12
36 30 13

Telegrammanschrift:
Babetzpat München
Telex 5 215 360

4690 Herne 1,
Schaeferstraße 18
Postfach 1140

0040809

Pat.-Anw. Herrmann-Trentepohl
Fernsprecher: 0 23 23 / 5 10 13
5 10 14

Telegrammanschrift:
Bahrpatente Herne
Telex 08 229 853

Ref.: A 30 687 X/Wd/P
in der Antwort bitte angeben

Zuschrift bitte nach:

H e r n e     1

19. Mai 1981

Becker-Prünte GmbH, August-Becker-Str. 10, 4354 Datteln/Westf.

"Kettentriebrad, insbesondere für Rundgliederketten"

Die Erfindung betrifft ein Kettentriebrad, insbesondere für Rundgliederketten, bei dem die Zähne eines ein- oder mehrteiligen Zahnrades jeweils in jedes zweite Glied der Kette eingreifen, während die Verbindungskettenglieder in den von den Zahnflanken begrenzten Lücken untergebracht sind, wobei zur Abstützung der Eingriffskettenglieder an gegenüberliegenden Seiten jedes Zahnes Konsolen als Widerlager für die Kettengliedschenkel ausgebildet sind.

Derartige Kettentriebräder unterscheiden sich durch das nach Art eines Triebstockes verzahnte Rad von denjenigen Kettentriebrädern, welche die im Eingriff mit dem Rad

- 2 -

Bankkonten:     Bayerische Vereinsbank München 952 287     Dresdner Bank AG Herne 7-520 499     Postscheckkonto Dortmund 558 68-467

befindlichen Kettenglieder formschlüssig in Taschen halten, welche auf dem Umfang des Rades eingeformt sind. Sie haben u.a. den Vorteil einer wirksamen Selbstreinigung der Zähne und der Kettenglieder durch den Eingriff der Zähne und werden daher häufig in Förderern eingesetzt, die ein zu Verklebungen und Blockierungen des Kettentriebes neigendes Gut befördern. Beispiele hierfür sind landwirtschaftliche Dungförderanlagen, welche z.B. zum Entmisten von Viehställen verwendet werden.

Im allgemeinen verwendet man auf die Zahnräder solcher Kettentriebräder Zahnformen an, die einer Evolventenverzahnung entsprechen oder ihr weitgehend nachgebildet sind, wobei die Zahnflanken zur Abstützung der Kettengliedrundungen der in den Zahnlücken aufgenommenen Kettenglieder ausgenommen sein können. Die Konsolenpaare der Zähne begrenzen die Eindringtiefe der Zähne zwischen die geraden Schenkel der Eingriffskettenglieder und definieren durch ihre Auflagerflächen die Eingriffslinie, die einem um die Achse der Zahnradwelle gelegten Polygonzug entspricht. Die Zahnlücken müssen so tief ausgearbeitet sein, daß genügend Spiel zwischen den wellenseitigen Schenkeln der nicht im Eingriff befindlichen Kettenglieder und dem Zahnradkörper in den Zahnlücken verbleibt. Häufig sind besondere Wälzflächen für die Rundungen dieser Kettenglieder in den erwähnten Ausnehmungen der Zahnflanken vorgesehen, um bei hohen Umlaufgeschwindigkeiten noch einen ruckfreien Umlauf der Kette um das Zahnrad zu erreichen.

0040809

Bei derartigen Kettengliedern muß jedoch damit gerechnet werden, daß sich nach längerem oder kürzerem Betrieb die Kettenteilung u.a. durch die Längung der Kette vergrößert. Andererseits muß man während des gesamten Betriebes dafür sorgen, daß die Eingriffskettenglieder nicht übermäßigen Belastungen ausgesetzt werden, unter denen sich vorzeitige Kettenbrüche einstellen können.

Bei den bekannten Kettentrieben bilden die beschriebenen Konsolen Baueinheiten mit den betreffenden Teilen des Zahnrades, d.h. sie sind bei einteiligen Zahnrädern einteilig mit dem Zahnradkörper und bei mehrteiligen Zahnrädern einteilig mit den betreffenden Zahnradsektionen ausgeführt. Diese Zahnräder sind nämlich entweder aus einem Sonderstahlguß hergestellt und randgehärtet, um eine hohe Verschleißfestigkeit zu erzielen, oder sie sind mit feingegossenen Zähnen aus einer Legierung, die häufig Chrom enthält, versehen. Es hat sich jedoch herausgestellt, daß namentlich langgliedrige Rundstahlketten, etwa der Abmessungen 16 x 100 mm (Teilung ≙ 5d) nach einer gewissen Laufzeit in den inneren Gliedrundungen verschleißen. Daraus ergibt sich eine Vergrößerung der Kettenteilung, welche ihrerseits den Teilkreisdurchmesser der Kette auf dem Zahnrad vergrößert, so daß dieser mit dem ursprünglichen Teilkreisdurchmesser nicht mehr übereinstimmt.

Diese Erscheinung führt einerseits dazu, daß infolge Verschlechterung der Eingriffsverhältnisse der Lauf der Kette um das Zahnrad unruhig, d.h. stoßartig wird. Das führt zu unerwünschten Belastungen des Kettentriebes und der stationären Teile, mit denen ein solcher Kettentrieb normalerweise zusammenwirkt. Andererseits wird dadurch die Auflage der Eingriffskettenglieder auf den beschriebenen Konsolen unvollkommen. Daraus ergibt sich u.a. eine Biegebelastung der Eingriffskettenglieder auf dem Zahnrad, die vor und hinter dem Zahnrad nicht auftritt. Es handelt sich deswegen um eine Wechselbiegebeanspruchung, deren Folge Ermüdungsbrüche des Kettenstahles sind. Diese Biegebelastungen können bei entsprechender Verschlechterung der Eingriffsbedingungen sogar zu plastischen Verformungen der Eingriffskettenglieder führen. Das bedingt dann eine noch weitergehendere Verschlechterung der Laufruhe der Kette; die dadurch ausgelösten Stöße führen ihrerseits u.a. zu vorzeitigen Kettenbrüchen. Besonders unangenehm gestalten sich diese Verhältnisse, je kleiner die Zähnezahl des betreffenden Rades ist. Dabei muß man berücksichtigen, daß für manche Kettentriebe Kettenräder mit lediglich vier Zähnen Verwendung finden müssen. Darüberhinaus verschleißen auch die Verbindungskettenglieder an ihren Außenrundungen infolge der vergrößerten Reibung an den Zahnflanken zusätzlich.

Der Erfindung liegt die Aufgabe zugrunde, die Lebensdauer der Ketten, die um Zahnräder der bezeichneten Art umlaufen, zu erhöhen und damit gleichzeitig das Kettentriebrad, d.h. insbesondere sein Zahnrad zu schonen.

Gemäß der Erfindung wird diese Aufgabe dadurch gelöst, daß die Konsolen als gesonderte Bauteile ausgebildet und um jeweils eine den betreffenden Zahnfluß durchsetzende Achse drehbeweglich angeordnet sind, die koaxial zur Zahnradwelle verläuft.

Dadurch wird erreicht, daß sich die Konsolen unabhängig von den Änderungen der Kettenteilung der Lage des Eingriffskettengliedes anpassen können, wodurch die erwähnten Biegebeanspruchungen und Verformungen dieser Kettenglieder weitgehend vermieden werden.

Vorzugsweise und gemäß einem weiteren Merkmal der Erfindung durchsetzt zur Vereinfachung der Konsolenlagerung die Achse die Konsolen die radiale Symmetrieebene seiner Zahnflanken. Durch Schwenken um diese Achse können sich dann die Konsolen der Lage des Eingriffskettengliedes anpassen, so daß jedes dieser Glieder auf seiner vollen Länge der Konsole aufliegt. Vorzugsweise ist diese Schwenkbewegung begrenzt, um unkontrollierte Drehungen der Konsolenpaare und dadurch bedingtes Überspringen der Zähne zu vermeiden.

Es trägt wesentlich zur Vereinfachung des Aufbaues des Zahnrades bei, wenn gemäß einem weiteren Merkmal der Erfindung die Konsolen jedes Zahnes um eine gemeinsame Achse drehbeweglich angeordnet sind. Dann nämlich läßt sich der gleiche Zapfen für die beiden die Schwenkbewegung der Konsolen bewirkenden Gelenke ausnutzen, d.h. für die beiden auf jeder Seite des Zahnes angeordneten Konsolen einsetzen.

Eine weitere zweckmäßige Ausführungsform der Erfindung besteht darin, daß die Konsolen symmetrisch zu einer tangentialen Mittellinie ausgebildet sind und die Drehachse des Drehgelenkes jedes Konsolenpaares radial exzentrisch aus der tangentialen Mittellinie heraus versetzt ist. Bei einer derartigen Ausführungsform kann man die Konsolenpaare zunächst so einbauen, daß die Auflage für die Kettenglieder auf den Konsolen näher am Mittelpunkt des Kettentriebrades liegt. Wenn dann nach einer gewissen Laufzeit die Kettenteilung größer geworden ist, kann man die Konsolen wenden, wodurch die Auflage der Kettenglieder sich vom Mittelpunkt des Kettenrades vergrößert. Dadurch paßt man die Eindringtiefe der Zähne der vergrößerten Kettengliedlänge an. Das ergibt dann eine Verbesserung der Eingriffsverhältnisse, welche die Laufzeit noch weiter verlängert.

Bei Verwendung von erfindungsgemäßen Kettentriebrädern in Kettentrieben aus langgliedrigen Rundstahlketten 16 x 100 mm hat sich ergeben, daß die bis dahin auftretenden zahlreichen Störungen durch starken Verschleiß und verformte Kettenglieder praktisch völlig ausgeschaltet wurden und die Lebensdauer der Rundstahlketten sich wesentlich verlängert.

Die Einzelheiten, weiteren Merkmale und andere Vorteile der Erfindung ergeben sich aus der nachfolgenden Beschreibung einer Ausführungsform anhand der Figuren in der Zeichnung. Es zeigen

Fig. 1 unter Fortlassung aller für das Verständnis der Erfindung nicht erforderlichen Einzelheiten ein Kettentriebrad gemäß der Erfindung in Seitenansicht,

Fig. 2 einen Teilschnitt längs der Linie II-II der
Fig. 1,

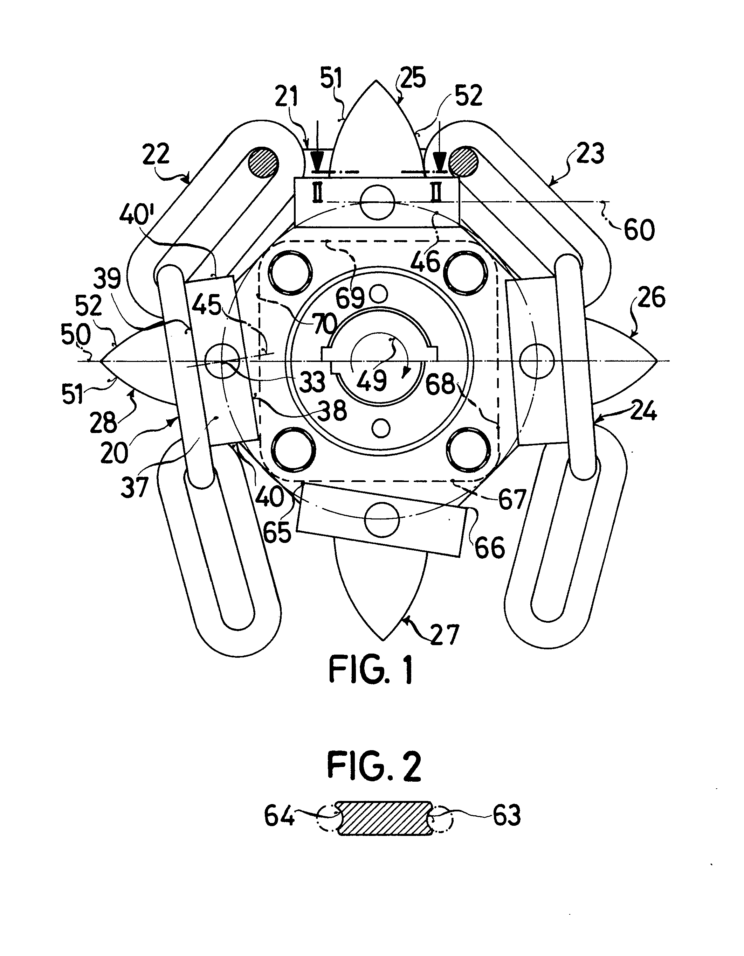

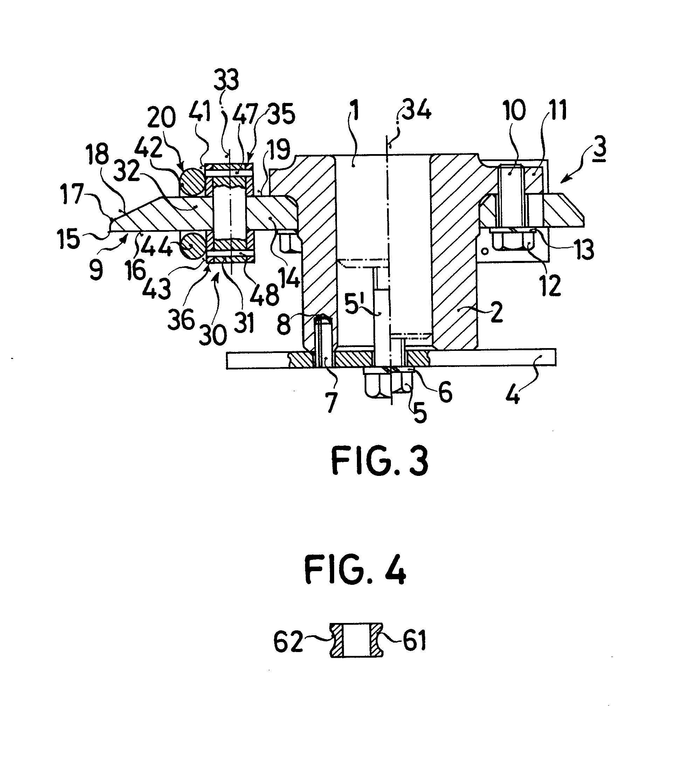

Fig. 3 einen Schnitt durch den Gegenstand der Fig. 1 so,
daß sich eine Draufsicht ergibt und

Fig. 4 eine abgeänderte Ausführungsform einer Konsole in
einem der Fig. 3 entsprechenden Schnitt.

Auf einer Welle 1, welche die Drehbewegung auf einen Kettentrieb überträgt, ist die Nabe 2 eines allgemein mit 3
bezeichneten Kettentriebrades drehfest angebracht. Dazu
ist eine Scheibe 4 mit Hilfe einer Schraube 5, deren
Bolzen bei 5' dargestellt ist, mit der Stirnseite der
Nabe 2 verspannt. Das erfolgt über den Sechskantkopf 5,
der sich auf einem Federring 6 abstützt. Der Federring 6
liegt der Scheibe 4 auf, die mit Hilfe von Spannhülsen 7
mit der Nabe 2 verbunden ist. Die Spannhülsen liegen in
entsprechenden Sackbohrungen 8, welche in der Stirnseite
der Nabe 2 angebracht sind.

Ein ein- oder mehrteiliges Zahnrad 9 sitzt drehfest auf
der Nabe 2, bildet jedoch einen gesonderten Teil des
Kettentriebrades. Es ist daher mit Hilfe mehrerer
Schraubenbolzen 10 an einem Nabenflansch 11 befestigt.
Die Schraubenbolzen sind in entsprechende Bohrungen des
Nabenflansches 11 eingeschraubt und stützen sich mit der
Unterseite ihrer Köpfe 12 über Federringe 13 auf dem
Zahnradkörper 14 ab. Jeder dieser Zähne hat eine Zahnspitze, die bei 15 in Fig. 3 zu erkennen ist, die von
einer ebenen Fläche 16 ausgeht und über eine Rundung 17 in
einen abgeschrägten Bereich 18 übergeht, welcher bis zu einer ebenen Fläche 19 verläuft, der parallel zu der ebenen Fläche 16 angeordnet ist. Durch die Spitze 15 wird der Eingriff der Zähne erleichtert, und die Schrägfläche 18 dient zur Führung der Eingriffskettenglieder, von denen eines in Fig. 3 mit 20 bezeichnet ist. Liegt die Welle 1 horizontal, so steht das Zahnrad senkrecht, und die Eingriffskettenglieder 20 liegen flach. Benachbarte Eingriffskettenglieder 20, 21 (Fig. 1) sind durch ein senkrecht stehendes Kettenglied 22 verbunden. Die senkrecht stehenden Kettenglieder 22, 23 liegen im Gegensatz zu den Eingriffskettengliedern 20, 21 und 24 in den Lücken zwischen den Zähnen, von denen außer dem Zahn 28 noch weitere Zähne 25-27 in Fig. 1 dargestellt sind. Da die Zähne unter sich gleich ausgebildet sind, genügt es, anhand des Zahnes 28 die weiteren Einzelheiten zu beschreiben:

Unterhalb des Zahnes 28 in der die Zahnstütze durchsetzenden Radialebene 50 liegt in der Zahnscheibe ein Drehgelenk 30 mit einem Gelenkbolzen 31, welcher die Zahnscheibe 32 senkrecht, d.h. koaxial zur Welle 1 durchsetzt. Die geometrische Gelenkachse ist mit 33 bezeichnet und verläuft dementsprechend parallel zur geometrischen Achse 34 der Welle 1.

Auf jeder der beiden Seiten des Zahnes 28, die gemäß dem Ausführungsbeispiel der Fig. 3 einerseits von den Flächen 18 und 19 und andererseits von der Fläche 16 gebildet werden, befindet sich eine Konsole 35 bzw. 36, und auch alle Konsolen des Zahnrades sind unter sich gleich. Es handelt sich um Flacheisenabschnitte 37 (Fig. 1), so daß die Konsolen längere Seiten 38, 39 aufweisen, welche tangential und rechtwinklig zu den kürzeren Seiten
40 und 40' verlaufen. Die auf der Seite 39 ausgebildete ebene Fläche 41 dient zur Abstützung des geraden
Kettengliedschenkels 42, während die gegenüberliegende
Fläche 43 entsprechend als Auflagefläche für den anderen
Kettengliedschenkel 44 Verwendung findet. Gemäß dem
Ausführungsbeispiel durchsetzt die geometrische Achse 33
die radiale Mittelebene 45 der Konsole und des Zahnes
und durchstößt auch einen Teilkreis 46 des Zahnrades,
auf dem sämtliche geometrischen Achsen der Gelenke 30
angeordnet sind. Die beiden Konsolen 35 und 36 sind mit
Hilfe von Splinten 47, 48 mit dem Gelenkbolzen 31 versperrt. Diese Splinte sitzen in Bohrungen, welche die
Konsolen und den Gelenkbolzen 31 durchsetzen und miteinander ausgefluchtet werden können.

Geht man von den Konsolen aus, so durchstößt die geometrische Achse dieses Drehgelenkes 30 außerdem die
tangentiale Mittellinie 60 jeder Konsole 35, 36. Das
kann geändert werden, indem man den Durchstoßungspunkt
der geometrischen Achse 33 radial exzentrisch aus der
tangentialen Mittellinie bzw. Mittelebene 60 der Konsolen heraus verlegt. Wenn man die Konsolen unter diesen
Umständen wendet, kann man die jeweilige Auflagefläche
auf den längeren Seiten 38, 39 der Konsolen radial weiter vom Mittelpunkt des Rades entfernt anordnen bzw.
radial näher an den Mittelpunkt des Rades heranrücken.

Man kann ferner gemäß Fig.4 die ebene Auflagefläche auf
den längeren Seiten 38, 39 der Konsolen durch Hohlkehlen
61, 62 ersetzen, die sich den Rundungen des Kettenstahles
anpassen, so daß statt einer linienförmigen, eine flächen-

hafte Auflage des Kettengliedes entsteht, welche den Verschleiß des Kettenstahles und der Konsole herabsetzt. Aus dem gleichen Grunde ist nach Fig. 2 jede Zahnflanke 51, 52 mit einer Hohlkehle 63, 64 versehen, um den Außenrundungen der Zwischenkettenglieder 22, 23 eine bessere, d.h. verschleißärmere Auflage zu geben.

Gemäß dem dargestellten Ausführungsbeispiel ist die Schwenkbewegung der Konsolen in den Drehgelenken 30 begrenzt. Dazu dienen die jeweils radial inneren Ecken 65, 66 zwischen den kürzeren Seiten 40, 40' und der radial inneren Längsseite, welche in Fig. 1 mit 38 bezeichnet ist, der Konsolen 35, 36, sowie die Vierkantausbildung des Nabenflansches 11, welche die rechtwinklig zueinander verlaufenden Tangentialflächen 67-70 entstehen läßt, welche gestrichelt in Fig. 1 wiedergegeben sind. Die Anordnung ist so getroffen, daß unter jedem Zahn 25-28 eine solche Tangentialfläche angebracht ist, auf der sich die bezeichneten Ecken 65, 66 wechselseitig abstützen können, um die Verschwenkbewegung der Konsolen entsprechend zu begrenzen.

Im Betrieb dreht sich das beschriebene Kettentriebrad in Richtung des Pfeiles 49, und die Zähne greifen in die beschriebenen Glieder der gespannten Rundgliederkette ein. Entweder handelt es sich um einen Antrieb des Kettengliedes. Dann wird die Rundgliederkette von dem Kettentriebrad mitgenommen. Oder es handelt sich um eine Umlenkung des Kettentriebes. Dann nimmt die Rundgliederkette das Kettentriebrad mit.

Wenn sich die Kettenteilung ändert, etwa weil in den Kettengliedrundungen Material abgetragen worden ist und/oder sich die Kette gelängt hat, kann sich die Lage der Eingriffskettenglieder 20 bzw. 21, 24 auf den betreffenden Konsolen ebenfalls ändern. Da sich aber die Konsolen 35, 36 gleichzeitig um die geometrische Achse 33 verschwenken können, werden entsprechende Biegemomente vermieden.

Bei der nicht dargestellten Ausführungsform der Erfindung, die oben beschrieben worden ist und bei der die geometrische Achse radial exzentrisch zur tangentialen Mittellinie bzw. Mittelebene 60 der Konsolen heraus verlegt ist, kann man durch Wenden der Konsolen die Auflagerflächen der Kettenglieder weiter vom Mittelpunkt des Rades nach außen verlegen, um dem Verschleiß Rechnung zu tragen.

Patentansprüche:

1. Kettentriebrad, insbesondere für Rundgliederketten, bei dem die Zähne eines ein- oder mehrteiligen Zahnrades jeweils in jedes zweite Glied der Kette eingreifen, während die Verbindungskettenglieder in den von den Zahnflanken begrenzten Lücken untergebracht sind, wobei zur Abstützung der Eingriffskettenglieder an gegenüberliegenden Seiten jedes Zahnes Konsolen als Widerlager für die Kettengliedschenkel ausgebildet sind,

   d a d u r c h   g e k e n n z e i c h n e t, daß die Konsolen (35, 36) als gesonderte Bauteile ausgebildet und um jeweils eine den betreffenden Zahnfuß (32) durchsetzende Achse (33) drehbeweglich angeordnet sind, die koaxial zur Zahnradwelle (1) verläuft.

2. Kettentriebrad nach Anspruch 1,
   d a d u r c h   g e k e n n z e i c h n e t, daß die Achse (33) der Drehbewegung den betreffenden Zahn (28) in der radialen Symmetrieebene (50) seiner Zahnflanken (51, 52) durchsetzt.

3. Kettentriebrad nach einem der Ansprüche 1 oder 2,
   d a d u r c h   g e k e n n z e i c h n e t, daß das Konsolenpaar (35, 36) jedes Zahnes (28; 25-27) um eine gemeinsame Achse (33) drehbeweglich angeordnet ist.

4. Kettentriebrad nach einem der Ansprüche 1 bis 3,
   d a d u r c h    g e ke n n z e i c h n e t,
   daß die Verschwenkbewegung der Konsolenpaare um die
   Drehgelenke (30) durch die radial inneren Ecken
   (65, 66) zwischen kürzeren Seiten (40, 40') und der
   radial inneren Längsseite (38) jeder Konsole (35, 36),
   sowie durch Mehrkantausbildung des Nabenflansches
   (11) begrenzt ist.

5. Kettentriebrad nach einem der Ansprüche 1 bis 4,
   d a d u r c h    g e k e n n z e i c h n e t,
   daß die Anzahl der durch die Mehrkantausbildung des
   Nabenflansches (11) entstehenden Tangentialflächen
   (67-70) der Zähnezahl entspricht, wobei jedem Zahn
   (25-28) eine der Tangentialflächen (67-70) zugeordnet
   ist.

6. Kettentriebrad nach einem der Ansprüche 1 bis 3,
   d a d u r c h    g e k e n n z e i c h n e t,
   daß die Konsolen (35,36) symmetrisch zu einer tangentialen Mittellinie (60, ausgebildet sind und die Drehachse (33) des Drehgelenkes (30) jedes Konsolenpaares (35, 36) radial exzentrisch aus der
   tangentialen Mittellinie (60) heraus versetzt ist.

FIG. 1

FIG. 2

FIG. 3

FIG. 4